# EUROPÄISCHE PATENTSCHRIFT

(11) **EP 0 986 494 B1**
(45) Veröffentlichungstag und Bekanntmachung des Hinweises auf die Patenterteilung: **01.06.2005**
(21) Anmeldenummer: 99914439.7
(22) Anmeldetag: 11.03.1999
(51) Int. Cl.: B60S 1/08

(54) **OPTISCHER SENSOR**
OPTICAL SENSOR
CAPTEUR OPTIQUE

(30) Priorität: 17.03.1998 DE 19811531; 27.08.1998 DE 19838881
(43) Veröffentlichungstag der Anmeldung: 22.03.2000
(73) Patentinhaber: ROBERT BOSCH GMBH, 70442 Stuttgart (DE)
(72) Erfinder: HOG, Norbert, D-77815 Bühl (DE); MICHENFELDER, Gebhard, D-77839 Lichtenau (DE); PIENTKA, Rainer, D-77871 Renchen (DE); LORENZ, Stefanie, D-76534 Baden-Baden (DE); BURKART, Manfred, D-76473 Iffezheim (DE)
(86) Internationale Anmeldenummer: PCT/DE1999/000666
(87) Internationale Veröffentlichungsnummer: WO 1999/047397

(56) Entgegenhaltungen:
- DE-A- 19 701 258
- DE-A- 19 804 165
- DE-C- 4 330 710
- FR-A- 2 723 448

## Beschreibung

Die Erfindung betrifft einen optischen Sensor mit den im Oberbegriff des Anspruchs 1 genannten Merkmalen.

### Stand der Technik

Es sind Scheibenwischvorrichtungen für Kraftfahrzeuge bekannt, bei denen eine Steuerung der Scheibenwischer nicht nur über einen Lenkstockhebel, sondern zusätzlich über einen optischen Regensensor erfolgt. Der optische Regensensor umfaßt üblicherweise eine Lichtquelle, deren elektromagnetische Strahlung von der Windschutzscheibe, je nach Feuchtigkeitsbelag auf der Windschutzscheibe unterschiedlich reflektiert wird. Der reflektierte Anteil wird mittels eines Photoelementes erfaßt, so daß ein dem Feuchtigkeitsbelag entsprechendes Ausgangssignal des Regensensors bereitgestellt werden kann. Diese Ausgangssignale können derart ausgewertet und zur Steuerung der Scheibenwischer verwendet werden, daß sowohl die Einschaltung als auch die Wischgeschwindigkeit in Abhängigkeit von einer gemessenen Regenmenge variiert wird.

Derartige Regensensoren, wie beispielsweise aus der FR-A-2 723 448 bekannt werden üblicherweise an der Innenseite der Windschutzscheibe angeordnet. Um eine Beeinträchtigung einer Fahrersicht zu vermeiden, ist bekannt, die Regensensoren im Bereich eines Innenspiegels, also zwischen Innenspiegel und Windschutzscheibe, anzuordnen. Hierbei sind die Regensensoren in einem Gehäuse angeordnet, das mit einer Grundfläche in Anlagekontakt mit der Windschutzscheibe steht. Bekannt ist, derartige Gehäuse mit einer eckigen oder runden Grundfläche zu versehen. Hierbei ist nachteilig, daß sowohl bei einer eckigen als auch bei einer runden Grundfläche sich die Regensensoren nur schwer in eine Abdeckung beziehungsweise Befestigung eines Innenspiegels integrieren lassen und darüber hinaus einen optischen Gesamteindruck der Anordnung beeinträchtigen. Gerade da diese Regensensoren an exponierter Stelle im Kraftfahrzeug angeordnet sind, die sowohl durch einen Kraftfahrzeugbenutzer als auch von Betrachtern des Kraftfahrzeuges gut einsehbar ist, wird ein Gesamteindruck beeinträchtigt.

### Vorteile der Erfindung

Der erfindungsgemäße optische Sensor mit den im Anspruch 1 genannten Merkmalen besitzt demgegenüber den Vorteil, daß dieser in einfacher Weise in eine Abdekkung eines Fußes eines Innenspiegels integrierbar ist. Dadurch, daß die Grundfläche des Gehäuses oval ist, lassen sich die geometrischen Abmessungen des Gehäuses des optischen Sensors so optimieren, daß einerseits eine genügend große Grundfläche für die Aufrechterhaltung der Funktionen des optischen Sensors zur Verfügung steht und andererseits diese jedoch so ausgebildet ist, daß neben einer ansprechenden äußeren Ansicht diese unter optimaler Ausnutzung der benötigten Fläche in einen Spiegelfuß integrierbar ist. Durch die ovale Formgebung in der Grundfläche läßt sich in bevorzugter Ausgestaltung der Erfindung eine die elektronischen und/oder optischen Bauelemente des Sensors tragende Platine platzsparend in das Gehäuse integrieren.

Insbesondere, wenn nach bevorzugter Ausgestaltung der Erfindung vorgesehen ist, daß die Platine eine trapezförmige oder rautenförmige Kontur aufweist, läßt sich diese in optimaler Weise in das Gehäuse integrieren, ohne daß, beispielsweise wie bei runder Grundfläche, eine relativ große Blindfläche, das heißt, eine Fläche die nicht zur Anordnung optischer und elektronischer Elemente benötigt wird, vorzuhalten ist. Somit läßt sich die Bauform des optischen Sensors verkleinern, ohne daß eine ansprechende äußere Formgestalt verlorengeht.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Druntersicht eines optischen Sensors;
- Figur 2: eine schematische Seitenansicht des optischen Sensors;
- Figur 3: eine schematische Draufsicht auf den optischen Sensor und
- Figur 4: eine alternative Befestigungsmöglichkeit des Sensors.

### Beschreibung des Ausführungsbeispiels

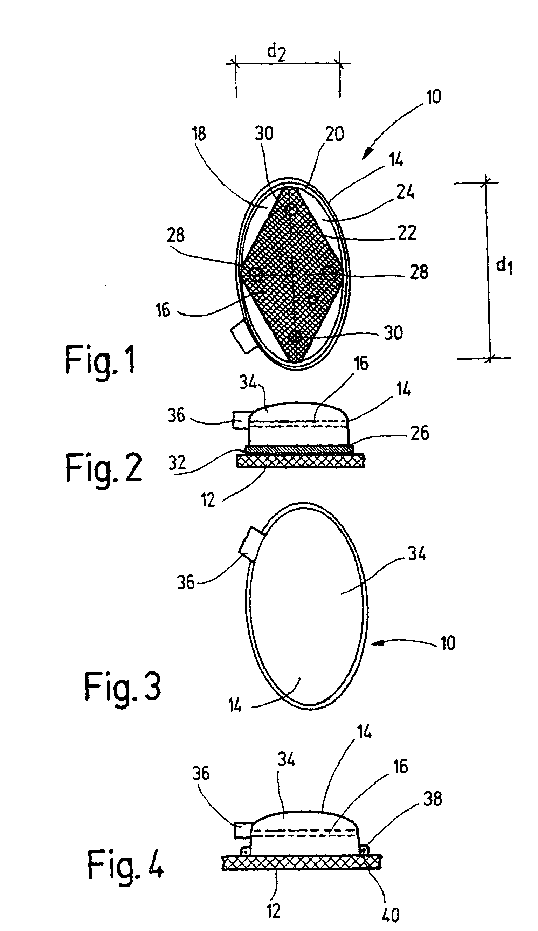

In den Figuren 1, 2 und 3 sind in verschiedenen schematischen Ansichten ein optischer Sensor 10 gezeigt, der innen an einer Windschutzscheibe 12 eines Kraftfahrzeuges befestigt ist. Die Montage des optischen Sensors 10 hinter der Windschutzscheibe 12 kann beispielsweise durch Kleben in Höhe eines hier nicht dargestellten Innenrückspiegels erfolgen. Bei einer solchen Positionierung entsteht keine zusätzliche Sichtbehinderung für einen Fahrer. Die Komponenten, insbesondere die optischen und elektronischen Bauteile des optischen Sensors 10 sind in einem Gehäuse 14 angeordnet, das in Richtung des Fahrgastraumes lichtundurchlässig ist.

Im Gehäuse 14 ist eine Platine 16 angeordnet, auf der hier im einzelnen nicht detailliert dargestellte optische und elektronische Bauelemente montiert sind. Aufbau und Funktion eines optischen Sensors 10, der als Regensensor an Kraftfahrzeugen eingesetzt wird, sind bekannt, so daß im Rahmen der vorliegenden Beschreibung hierauf nicht näher eingegangen werden soll.

Das Gehäuse 14 besitzt eine in Richtung der Windschutzscheibe 12 weisende ovale Grundfläche 18. Ein Großkreis der ovalen Grundfläche 18 besitzt einen Durchmesser d₁, der in etwa doppelt so groß ist wie ein Durchmesser d₂ eines Kleinkreises der ovalen Grundfläche 18. In Anpassung an die Durchmesser d₁ und d₂ besitzt die Platine 16 einen rautenförmigen Aufbau, so daß durch die Platine 16 die Grundfläche 18 optimal ausgenutzt werden kann. Darüber hinaus lassen sich rautenförmige Platinen 16 aufgrund der geraden Kanten gegenüber beispielsweise der Gehäuseform angepaßter Platinen in runder Ausführung kostengünstiger herstellen. Eine zwischen einem Gehäuserand 20 und einem Rand 22 der Platine verbleibende Blindfläche 24 ist durch die Kombination der ovalen Grundfläche 18 und der trapezförmigen Platine 16 auf ein Optimum minimiert.

Beabstandet zu der Platine ist ein Lichtleiter 26 angeordnet, der gleichzeitig eine Abdeckelung des Gehäuses 14 übernimmt. Der Lichtleiter 26 besitzt im einzelnen nicht näher gezeigte fokussierende Strukturen, mit denen eine Bündelung beziehungsweise gerichtete Ablenkung elektromagnetischer Wellen - sowohl empfangener als auch gesendeter elektromagnetischer Wellen des optischen Sensors 10 - erzielbar ist.

In der Darstellung gemäß Figur 1 sind schematisch Sendedioden 28 sowie Empfangsdioden 30 angedeutet, die jedoch in der Druntersicht unter den Sensor 10 nicht sichtbar sind. Diese dienen dem Senden beziehungsweise Empfangen elektromagnetischer Wellen, wobei der Lichtleiter 26 die erwähnte Fokussierung übernehmen kann.

Eine Befestigung des optischen Sensors 10 an der Windschutzscheibe 12 erfolgt über einen Rahmen auf der Scheibe und des darin eingeklipsten oder eingeklemmten Sensorgehäuses oder auch über eine transparente Klebefolie 32. Die Klebefolie 32 kann als beidseitig klebende Folie ausgebildet sein, wobei zunächst die der Windschutzscheibe 12 zugewandte Seite der Folie mit einer Schutzfolie versehen ist. Diese Schutzfolie dient einerseits dem Schutz des Lichtleiters 26 beim Transport vor der Montage und andererseits nach Abziehen der Freigabe der Klebeschicht zum kraftschlüssigen Befestigen an der Windschutzscheibe 12.

In der in Figur 2 gezeigten Seitenansicht wird deutlich, daß das Gehäuse 14 einen leicht gewölbten Grundkörper 34 aufweist, aus dem seitlich ein Stecker 36 herausgeführt ist. Innerhalb des Gehäuses 14 ist hier gestrichelt angedeutet die Platine 16, die beabstandet zu dem Lichtleiter 26 angeordnet ist. Der Stecker 36 dient der elektrischen Verbindung des Sensors 10 zu einer hier nicht dargestellten Auswerteelektronik. Je nach Aufbau des Sensors 10 kann eine Ankopplung mit einer Auswerteanordnung auch optisch mittels Lichtwellenleiter erfolgen.

In der Figur 3 ist eine Draufsicht auf den Sensor 10 gezeigt, die der Innenansicht im Kraftfahrzeug entspricht. Hierbei wird nochmals die ansprechende optische Gestaltung infolge der ovalen Grundfläche 18 des Gehäuses 14 deutlich.

In der Figur 4 ist eine weitere Befestigungsmöglichkeit des Sensors 10 auf der Windschutzscheibe 12 gezeigt. Auf der Windschutzscheibe 12 ist ein Rahmen 38 befestigt, beispielsweise durch Klebung. In den Rahmen 38 ist das Gehäuse 14 des Sensors 10 befestigt. Das Gehäuse 14 kann beispielsweise über hier lediglich angedeutete Rastverbindungen 40 in den Rahmen 38 eingeklipst sein. Denkbar ist auch ein Einklemmen des Gehäuses 14 in den Rahmen 38, wobei durch einen Reibschluß eine kraftschlüssige Verbindung zwischen dem Gehäuse 14 und dem Rahmen 38 gegeben ist.

## Patentansprüche

1. Optischer Sensor (10) für Kraftfahrzeuge, zur Erfassung einer Benetzung einer Oberfläche, mit einer wenigstens einen Sender (28) und wenigstens einen Empfänger (30) für elektromagnetische Wellen aufweisenden Meßstrecke, in der eine Windschutzscheibe (12) angeordnet ist, und die die Wellenausbreitung zwischen dem wenigstens einen Sender (28) und dem wenigstens einen Empfänger (30) derart beeinflußt, daß sich bei Ausbildung eines Belages auf der Windschutzscheibe, insbesondere bei einer Benetzung durch Niederschlag, ein vom Empfänger (30) generiertes Ausgangssignal ändert, und der optische Sensor (10) ein Gehäuse (14) umfaßt, das an der Innenseite der Windschutzscheibe angeordnet ist, wobei eine Grundfläche (18) des Gehäuses in Anlagekontakt mit der Windschutzscheibe steht, **dadurch gekennzeichnet, daß** die Grundfläche (18) des Gehäuses (14) oval ist, so daß sie unter optimaler Ausnutzung der benötigten Fläche in einen Spiegelfuß integrierbar ist.

2. Optischer Sensor nach Anspruch 1, **dadurch gekennzeichnet, daß** elektronische und/oder optische Komponenten des Sensors (10) auf einer Platine (16) montiert sind, die eine trapezförmige oder rautenförmige Kontur aufweist.

3. Optischer Sensor nach Anspruch 2, **dadurch gekennzeichnet, daß** eine Längsachse der Platine (16) einem Durchmesser (d₁) eines Großkreises der ovalen Gruhdfläche (18) und eine Querachse der Platine (16) einem Durchmesser (d₂) eines Kleinkreises der ovalen Grundfläche (18) entspricht.

4. Optischer Sensor nach einem der vorhergehenden Ansprüche, **dadurch gekennzeichnet, daß** das Gehäuse (14) durch einen Lichtleiter (26) verschlossen ist, der in Anlagekontakt mit der Windschutzscheibe (12) steht.

5. Optischer Sensor nach einem der vorhergehenden Ansprüche, **dadurch gekennzeichnet, daß** das Gehäuse (14) mittels einer transparenten Klebefolie an der Windschutzscheibe (12) befestigt ist.

6. Optischer Sensor nach einem der vorhergehenden Ansprüche, **dadurch gekennzeichnet, daß** der optische Sensor über einen Befestigungsrahmen mit der Windschutzscheibe (12) verbunden, insbesondere geklipst oder geklemmt, ist.

## Claims

1. Optical sensor (10) for motor vehicles, for detecting wetting of a surface, having a measuring path which has at least one transmitter (28) and at least one receiver (30) for electromagnetic waves, in which measuring path a windscreen (12) is arranged, and which influences the wave propagation between the at least one transmitter (28) and the at least one receiver (30) in such a way that, when a coating is formed on the windscreen, in particular in the event of wetting by precipitation, an output signal which is generated by the receiver (30) is changed, and the optical sensor (10) comprises a casing (14) which is arranged on the inside of the windscreen, a basic surface (18) of the casing being in bearing contact with the windscreen, **characterized in that** the basic surface (18) of the casing (14) is oval, with the result that it can be integrated into the foot of a mirror while utilizing the required area in an optimum manner.

2. Optical sensor according to Claim 1, **characterized in that** electronic and/or optical components of the sensor (10) are mounted on a sheet metal blank (16) which has a trapezoidal or rhomboidal contour.

3. Optical sensor according to Claim 2, **characterized in that** a longitudinal axis of the sheet metal blank (16) corresponds to a diameter (d₁) of a great circle of the oval basic area (18), and a transverse axis of the sheet metal blank (16) corresponds to a diameter (d₂) of a small circle of the oval basic area (18).

4. Optical sensor according to one of the preceding claims, **characterized in that** the casing (14) is closed by a light guide (26) which is in bearing contact with the windscreen (12).

5. Optical sensor according to one of the preceding claims, **characterized in that** the casing (14) is fastened to the windscreen (12) by means of a transparent adhesive film.

6. Optical sensor according to one of the preceding claims, **characterized in that** the optical sensor is connected, in particular clipped or clamped, to the windscreen (12) via a fastening frame.

## Revendications

1. Capteur optique (10) pour des véhicules automobiles, servant à détecter le mouillage d'une surface, et comprenant au moins un émetteur (28) et au moins un récepteur (30) pour des ondes électromagnétiques présentant un parcours de mesure dans lequel se trouve un pare-brise (12), la propagation des ondes entre l'au moins un émetteur (28) et l'au moins un récepteur (30) étant influencée de manière qu'un dépôt qui se forme sur le pare-brise, en particulier d'eau de pluie, modifie un signal de sortie généré par le récepteur (30), le capteur optique (10) comportant un boîtier (14) monté sur la face interne du pare-brise, et dont la surface de base (18) est en contact sur le pare-brise,
**caractérisé en ce que**
la surface de base (18) du boîtier (14) a une forme ovale, de sorte qu'elle peut être intégrée à un pied de rétroviseur tout en utilisant de manière optimale la surface nécessaire.

2. Capteur optique selon la revendication 1,
**caractérisé en ce que**
les composants électroniques et/ou optiques du capteur (10) sont montés sur une platine (16) dont le contour a la forme d'un trapèze ou d'un losange.

3. Capteur optique selon la revendication 2,
**caractérisé en ce que**
l'axe longitudinal de la platine (16) correspond au diamètre (di) d'un cercle circonscrit à la surface de base ovale (18), tandis que l'axe transversal de la platine correspond au diamètre (d₂) d'un cercle inscrit dans la surface de base ovale (18).

4. Capteur optique selon une des revendications précédentes,
**caractérisé en ce que**
le boîtier (14) est fermé par un conducteur optique (26) appliqué en contact sur le pare-brise (12).

5. Capteur optique selon une des revendications précédentes,
**caractérisé en ce que**
le boîtier (14) est fixé sur le pare-brise (12) par une pellicule adhésive transparente.

6. Capteur optique selon une des revendications précédentes,
**caractérisé en ce que**
le capteur optique est relié par un cadre de fixation au pare-brise (12), notamment en étant clipsé ou collé.
